Europäisches Patentamt

European Patent Office

Office européen des brevets

(11) Publication number: **0 220 852**
**A2**

# EUROPEAN PATENT APPLICATION

(21) Application number: 86307634.5

(22) Date of filing: 03.10.86

(51) Int. Cl.⁴: **F16D 69/02** , F16D 25/12

(30) Priority: 28.10.85 US 792110

(43) Date of publication of application:
06.05.87 Bulletin 87/19

(84) Designated Contracting States:
DE FR GB

(71) Applicant: GENERAL MOTORS CORPORATION
General Motors Building 3044 West Grand
Boulevard
Detroit Michigan 48202(US)

(72) Inventor: Nels, Terry Eugene
2973 Southfield Drive
Xenia Ohio 45385(US)
Inventor: Eldridge Larry
427 Red Haw Road
Dayton Ohio 45405(US)
Inventor: Doty, Gerald Leroy
1637 Sherwood Forest Drive
Miamisburg Ohio 45342(US)

(74) Representative: Breakwell, John Neil Bower et
al
GM Patent Section Vauxhall Motors Limited
Luton Office (F6) P.O. Box No. 3 Kimpton
Road
Luton Bedfordshire LU2 OSY(GB)

(54) Clutch plate member.

(57) A clutch plate member for operating in a fluid medium to transmit torque in a wide range of slip speeds to a metal mating surface situated on an opposing clutch plate member comprises a friction facing layer (A) which consists of thermoset resin-bonded carbon particles and is bonded to a compliant carrier sheet (C) that is in turn bonded to a metal support plate (E). The compliant carrier sheet improves the conformability of the friction facing layer to the metal mating surface, so resulting in a reduction in the maximum operating temperature of the friction facing layer.

Fig.1

## CLUTCH PLATE MEMBER

This invention relates to a clutch plate member as specified in the preamble of claim I, for example as disclosed in DE-A-I 525 334.

Clutch plate members of the type with which the present invention is concerned are used extensively in automotive transmissions utilising a fluid medium. Such a clutch plate member, when used in an automotive transmission as the driving member, when pressure is applied compresses and engages a driven member to drive the vehicle. To increase the fuel economy of a vehicle, it is desirable to have the clutch plate members engaged over a wide range of slip speeds (engine and transmission speed differential). It is therefore an important consideration when designing a clutch plate member to use a friction material which can be efficiently operated at a lower operating temperature over a wide range of slip speeds. This lower operating temperature leads to a more durable clutch plate member having a longer service life.

Another important consideration in the design of a clutch plate member is that the frictional property of the material should remain approximately constant over the wide range of slip speeds at which the clutch plate member operates, in order to minimise transmission shudder. Transmission shudder is a phenomenon which usually occurs at the friction interface when the static or low-speed coefficient of friction is higher than the dynamic or high-speed coefficient of friction. This condition causes the clutch to operate in a so-called stick-slip mode, which in turn produces the transmission shudder phenomenon.

A variety of friction materials have been used to construct the friction facing layer of an automotive clutch plate member. Most of these traditional friction materials can be categorised into two types. The first type is a highly porous fibrous material first made by traditional paper-making technology and then saturated with a thermoset plastics binder such as phenolic or epoxy plastics material. Such types of material provide good conformability with a rigid mating surface, due to their having high compressibility, but they typically have only moderate internal strength and moderate heat resistance, such that their use is thereby limited to medium-duty transmission applications. Materials of this type are described in US-A-3 3I6 I38 and US-A-2 733 797.

The second traditional type of friction material is a highly rigid material composed of granular or fibrous carbon or other similar material bonded by means of a thermoset type of plastics resin or a metallic brazing material. These materials have very high internal strength and a high energy-absorbing capacity, but they have the inherent drawback of poor conformability to a mating surface due to their rigidity. This poor conformability leads to hot-spot formation in the friction material, which in turn results in higher overall operating temperatures for the clutch plate member. Higher operating temperatures are believed to cause premature failure of the friction facing layer, and consequently a short service life. Materials of this type are disclosed in US-A-4 I46 527 and the said DE-A-I 525 334.

The present invention is concerned with the provision of a clutch plate member having a friction facing layer that offers both the conformability of a porous fibrous material and the strength and energy-absorbing capacity of a hard granular material.

The invention is also concerned with the provision of a clutch plate member having a friction facing layer which is of high conformability, high strength and high energy-absorbing capacity, and can be manufactured in a continuous process at low cost.

To these ends, a clutch plate member in accordance with the present invention is characterised by the features specified in the characterising portion of claim I.

The invention thereby makes available a clutch plate member which is suitable for use in an automotive transmission and has a high-durability self-conforming friction material layer consisting of carbon and phenolic particles bonded to a compliant carrier sheet.

The compliant carrier sheet improves the conformability of the rigid facing layer to another clutch plate.

The invention comprehends a new clutch plate member design consisting of a friction facing layer bonded to a rigid metal plate by a layer of adhesive, such a clutch plate member offering the conformability of a traditional porous fibrous material and yet the strength and energy-absorbing capability of a rigid granular material.

A preferred embodiment of a clutch plate member in accordance with the present invention is constructed in the following manner. One surface of a compliant carrier sheet of a porous fibrous nature having high conformability and compressive strength is coated with a granular mixture of carbon particles and a phenolic thermoset binder to form a friction facing layer. Such a friction facing layer can be produced in a continuous process at low manufacturing cost. The other surface of the compliant carrier sheet is then adhesively bonded to a rigid metal plate to form a clutch plate member.

In the drawing:

Figure 1 is a fragmentary cross-sectional view of a preferred embodiment of a clutch plate member in accordance with the present invention;

Figure 2 is a graph comparing coefficient of friction data at various slip speeds of the friction facing layer of a clutch plate member in accordance with the present invention with like data for a prior-art clutch plate member having a porous fibrous material as its friction facing layer;

Figure 3 is a graph comparing temperature data obtained at the interface between the friction material on a driving clutch plate member and a flat metal surface on a driven clutch plate member plotted against time for a clutch plate member in accordance with the present invention as compared with like data for a prior-art clutch plate member.

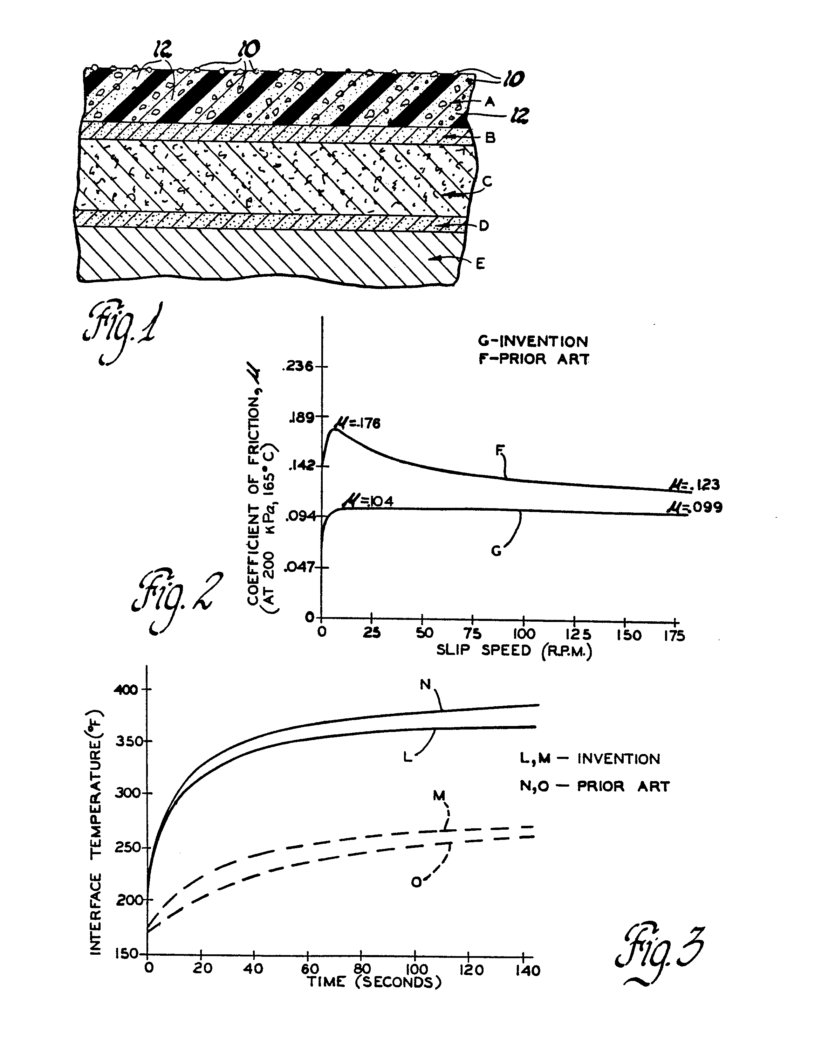

With reference now to Figure 1 of the drawing, in the cross-sectional view of a clutch plate member in accordance with the present invention which is illustrated there is shown a layer A composed of carbon particles 10 and phenolic powder 12 compression-moulded together on to a layer C, which comprises a compliant carrier sheet, with a layer B of solid-film adhesive interposed between the layers A and C. These layers A, B and C together form the friction facing layer when they are compression-moulded together. The carbon particles 10 used in this friction facing layer comprise particles of a petroleum-coke based carbon which are generally of spherical shape. The diameters of the particles are approximately within the range 0.05 to 0.15 mm (0.002 to 0.006 inch), carbon particles of this type being commercially available from suppliers such as Asbury Graphite Mills, Inc. The phenolic powder used in the preferred embodiment of the present invention is an epoxy-modified phenolic obtained from Schenectady Chemicals Co. as grade HRJ 1797. The powder was characterised by screen analysis to be zero per cent of +40 mesh and 96 per cent minimum of -200 mesh; it has a cure temperature of 135°C and has a 1.5 per cent maximum ash content. The carbon particles and the phenolic powder are mixed together in a suitable container at a weight percentage ratio of 60 to 85 per cent carbon particles to 15 to 40 per cent phenolic powder.

The compliant carrier sheet used in the preferred embodiment of the present invention is a friction paper composed primarily of cellulose fibres saturated with a liquid phenolic resin. The friction paper also contains small amounts of diatomaceous earth particles and other friction modifiers. The paper has a compressive modulus in the range of 35 to 70 kPa (5,000 to 10,000 psi), and it typically contains 35 to 65 per cent porosity, which provides high compliance and absorption of oil to keep the paper cool and lubricated during operation of the clutch plate member. A commercial source for this type of friction paper is Fabricon Automotive Products. A suitable thickness to use is 0.88 mm (0.035 inch). Other suitable materials having similar properties could alternatively be used as the compliant carrier sheet: for instance, sheets of epichlorhydrin rubber having a Shore A durometer hardness of 35 have been successfully used.

The friction facing layer which is illustrated in Figure 1 consists of the friction material layer A, the solid-film adhesive layer B and the compliant carrier sheet C, and is assembled to a metal substrate plate, shown as layer E, by the use of a second solid-film adhesive layer D. A suitable solid-film adhesive to be used in a friction facing layer in conformity with the present invention has been found to be a nitrile phenolic-based adhesive film supplied by Morgan Adhesive Company. A suitable thickness for the solid adhesive film to be used has been found to be between 0.025 and 0.05 mm - (0.001 and 0.002 inch). This solid adhesive film becomes tacky when heated to a temperature of 92°C (200°F).

Although solid-film adhesive was used in the preferred embodiment of the present invention, alternative possible bonding or fastening means should suggest themselves to the skilled person: for instance, various kinds of sprayed-on adhesive or even some mechanical means could be utilised to assemble the friction facing layer to the metal substrate plate.

The following Examples illustrate the assembly of clutch plate members in accordance with the present invention.

Example 1

Carbon particles are first blended with 15 to 40 weight per cent epoxy-modified phenolic resin powder. A layer of solid-film adhesive is placed on top of a carrier paper situated in a fixture for level fill of powder mixture. The blended carbon particles/epoxy modified phenolic powder is then level-filled on top of the carrier paper to a depth of 0.76 mm (0.030 inch). The fixture is first transferred to an oven set at a temperature of 134°C (275°F) for 20 seconds to heat-set the powder mixture. It is then transferred to a hot platen press heated to 230°C (450°F), and pressed under a pressure of 2.06 kPa (300 psi) for 15 seconds to bond the friction material layer to the carrier paper.

A second layer of solid-film adhesive is then tacked to the other surface of the carrier paper. A friction facing layer of the desired shape can then be blanked out of the resulting laminated sheet and bonded to a metal substrate plate. A pressure of approximately 3.44 kPa (500 psi) has been found to be adequate for this bonding operation.

This method is suitable both for making samples in the laboratory and for a production process.

## Example 2

This Example illustrates a method using a slurry process.

First, between 40 and 50 weight per cent of carbon particles are blended with 50 to 60 weight per cent of liquid phenolic resin obtained from Ashland Chemical Company as AROFENE 295-EI5 (AROFENE being a Registered Trade Mark). This slurry is then spread out by rollers on a continuous roll of adhesive film-coated friction paper to a thickness of approximately 0.76 mm (0.030 inch). The coated friction paper is then fed into a series of ovens set at a temperature of 120°C (250°F) on a conveyor belt for a total heating time of 15 minutes. The paper is then pressed in a series of pressure rollers at a pressure of 6.9 kPa (1000 psi) at a temperature of 230°C (450°F) for a total time of one minute. Desired shapes as required for the friction facing layer are then punched out from the roll and bonded to metal substrate plates to make clutch plate members.

This slurry process is a continuous process and can be completely automated to produce low-cost clutch plate members.

Advantages of a clutch plate member in accordance with the present invention are illustrated in Figures 2 and 3. Figure 2 is a graph of coefficient of friction data plotted against a range of slip speeds between 0 and 175 rounds (revolutions) per minute. Curve G represents data obtained on a friction facing layer made by bonding carbon particles/phenolic powder to a compliant carrier sheet. Curve F represents data obtained on a prior-art porous fibrous sheet without the carbon particles/phenolic powder layer. It is evident that for the friction facing layer in conformity with the present invention, curve G, the coefficient of friction remains essentially constant throughout a wide range of slip speeds between 10 and 175 rounds - (revolutions) per minute. By way of contrast, the coefficient of friction of the prior-art friction facing layer decreases by approximately 35 per cent within the same range of slip speeds.

he essentially constant coefficient of friction of the clutch plate member in conformity with the present invention over the wide range of slip speeds almost completely eliminates the transmission shudder phenomenon. Because of the elimination of shudder, drivability of the automobile using the clutch plate meber is greatly improved.

Figure 3 ilustrates benefits obtained when a compliant carrier sheet is used between the carbon particles/phenolic resin layer and the metal substrate plate, the temperature at the interface between the friction material on a driving clutch plate member and the mating metal surface on a driven clutch plate member being plotted against time in Figure 3. Curves L and M represent data obtained on a clutch plate member in conformity with the present invention, these curves L and M corresponding to data obtained at the high spot and low spot of the interface respectively. Curves N and O represent data obtained on a prior-art clutch plate member where no compliant carrier sheet was used, these curves N and O likewise corresponding to data obtained at the high spot and low spot of the interface respectively. The high-spot temperature at the interface is also referred to as the maximum operating temperature of the friction facing layer.

When the curves L and N are compared, it becomes evident that the high-spot temperatures of a clutch plate member having a compliant carrier sheet are approximately 14°C (25°F) lower than those obtained on a clutch plate member without the carrier sheet. A reduction in the high-spot temperature, that is, the maximum operating temperature, of approximately 7% is achieved.

It is desirable in the design of transmission clutch plate members to have the lowest possible high-spot temperature, so as to avoid degradation of the fluid medium used in the transmission and the phenolic resin contained in the friction material. It is further advantageous to have a lower high-spot temperature in order to provide a clutch plate member of high durability and long service life.

The low-spot temperatures, represented by the curves M and O in Figure 3, also show the advantages obtainable by the use of the present invention. The low-spot temperature data obtained on the clutch plate member in conformity with the present invention are approximately 14°C (25°F) higher than that obtained with the prior-art clutch plate member. This is a desirable result since it indicates that in the clutch plate member in conformity with the present invention the temperature gradient on the friction-face surface is smaller than that on the prior-art clutch plate member. A more uniform temperature distribution on the friction-face surface is believed to help eliminate the formation of hot spots. Since hot spots reduce the durability of the friction-face layer, an overall lower operating temperature resulting from a lower and more uniform temperature profile across the friction-face surface improves the service life of the clutch plate member.

The achievement of lower operating temperatures in the friction-face layer in conformity with the present invention can be explained as follows. Firstly, the two mating surfaces, namely the metal surface on a driven clutch plate member and the surface of the friction material layer, are both very rigid. Secondly, the two rigid mating surfaces are never perfectly flat, inasmuch as there is always waviness or taper present. A carrier sheet of highly compressible compliant paper placed between the metal substrate plate and the friction material layer on the driving clutch plate member improves conformability between the two mating surfaces, namely the surface of the driven clutch plate member and the surface of the friction material layer, when they are pressed against each other. Other data not shown here indicated that the contact area achieved between the two mating surfaces without the compliant carrier sheet is only approximately 30 per cent of the total available area, whereas the addition of a compliant carrier sheet between the metal substrate plate and the friction material layer increases the contact area to approximately 70 per cent of the total available area.

The amount of contact between the two rigid mating surfaces when they are pressed against each other is accordingly significantly improved, and this in turn makes it possible to achieve an overall lower operating temperature in the friction material layer, so leading to a clutch plate member having improved durability and service life.

In the preferred embodiment of a clutch plate member in accordance with the present invention as described herein, the compliant carrier sheet improves the conformability of the rigid facing layer to another clutch plate.

The preferred embodiment of the clutch plate member in accordance with the present invention as described herein also constitutes an automotive transmission clutch plate having a high-durability self-conforming friction material layer which minimises clutch shudder problems.

In Figure 3 of the drawing, the specified interface temperatures have the following metric equivalents:

400°F 202°C

350°F 175°C

300°F 147°C

250°F 120°C

200°F 92°C

150°F 65°C

## Claims

1. A clutch plate member for operating in a fluid medium to transmit torque to a metal mating surface situated on an opposing clutch plate member, the clutch plate member including a friction facing layer (A) comprising thermoset resin-bonded carbon particles, and a metal support plate (E),

characterised in that in the clutch plate member the friction facing layer (A) comprising the thermoset resin-bonded carbon particles is bonded to a compliant carrier sheet (C) which is in turn bonded to the metal support plate (E), and that the compliant carrier sheet (C) is effective to improve the conformability of the friction facing layer to the metal mating surface to an extent resulting in a reduction in the maximum operating temperature of the friction facing layer by at least 5%, and permitting operation of the clutch plate member over a wide range of slip speeds.

2. A clutch plate member according to claim 1, characterised in that the thermoset resin-bonded carbon particles have diameters in the range of 0.05 to 0.15 mm (0.002 to 0.006 inch), and are adhesively bonded to the compliant carrier sheet - (C), and that the compliant carrier sheet (C) has a minimum thickness of 0.25 mm (0.01 inch) and a maximum compressive modulus of 138 kPa (20,000 psi).

3. A clutch plate member according to claim 1 or 2, for operating in a range of slip speeds of 0 to 175 revolutions per minute, characterised in that the friction material contains between 60 and 85 weight per cent of carbon particles and between 15 and 40 weight per cent of thermoset resin, and that the metal support plate (E) is of sufficient stiffness to allow the specified reduction in the maximum operating temperature of the friction facing layer (A) to be achieved.

4. A clutch plate member according to any one of claims 1 to 3, characterised in that the compliant carrier sheet (C) is a friction paper composed primarily of cellulose fibres.

5. A clutch plate member according to any one of claims 1 to 3, characterised in that the compliant carrier sheet (C) is composed primarily of elastomeric material.

6. A clutch plate member according to any one of claims 1 to 5, characterised in that the thermoset resin is an epoxy-modified phenolic resin.

Fig. 1

G-INVENTION
F-PRIOR ART

Fig. 2

L,M — INVENTION

N,O — PRIOR ART

Fig. 3